# NEW EUROPEAN PATENT SPECIFICATION

(11) **EP 1 163 173 B2**
(45) Date of publication and mention of the opposition decision: **20.05.2009**
(45) Mention of the grant of the patent: 07.06.2006
(21) Application number: 00906804.0
(22) Date of filing: 17.01.2000
(51) Int. Cl.: B65F 5/00, E04F 17/12, B65G 53/04

(54) **METHOD AND APPARATUS IN CONNECTION WITH THE EMPTYING OF AN EXPANDED STORAGE VOLUME IN A REFUSE TRANSPORT SYSTEM**
VERFAHREN UND VORRICHTUNG ZUM ENTLEEREN DES INHALTS EINES STAURAUMES IN EINEM MÜLLTRANSPORTSYSTEM
PROCEDE ET APPAREIL PERMETTANT DE VIDER UN VOLUME DE STOCKAGE DEVELOPPE DANS UN SYSTEME DE TRANSPORT D'ORDURES

(30) Priority: 05.02.1999 SE 9900401
(43) Date of publication of application: 19.12.2001
(73) Proprietor: Envac AB, 117 84 Stockholm (SE)
(72) Inventor: HELLQVIST, Olle, S-136 34 Älta (SE); JANKEVICS, Verner, S-165 71 Hässelby (SE); HAMMAR, Rune, S-423 55 Torslanda (SE)
(74) Representative: Stenborg, Anders Vilhelm
(86) International application number: PCT/SE2000/000078
(87) International publication number: WO 2000/046130

(56) References cited:
- EP-A- 0 093 825
- WO-A1-98/47788
- GB-A- 1 522 631
- US-A- 3 887 053

## Description

### TECHNICAL FIELD

The present invention relates generally to the field of handling refuse, and more specifically relates to a method of emptying an expanded storage volume in a refuse transport system, as specified in the preamble of the accompanying claim 1, a vacuum operated refuse transport system according to the preamble of claim 7, an expanded storage volume for an insertion chute of a refuse transport system according to the preamble of claim 14 and a use of an expanded storage volume according to claim 18.

### BACKGROUND

Systems operating with vacuum for transporting above all domestic waste from apartment buildings in residential areas to collection centers, from which the refuse is transported by specific vehicles, have been successfully used for a long time and can generally be called "suction operated refuse systems" (see for instance U.S. Patent no. 3 887 053). Such suction operated refuse systems have worked without any major problems in smaller and middle sized residential areas. However, due to the fact that such systems have been employed in larger and larger residential areas, that is areas having more and more buildings and perhaps above all higher and higher buildings connected to each collection center, very great demands have been made on them. The reason for this is that a limit is approached, where the cycle times - that is the time consumed to empty the inserted refuse in all insertion chutes connected to the system - become so long that too large an amount of refuse will accumulate on the discharge valve of the insertion chutes carrying the heaviest load. This may jeopardize the efficient operation of the valves and thereby of the entire insertion system and accordingly the discharge and transport of the refuse.

This problem is discussed in our earlier International PCT-application having the publication no. WO98/47788, in which a solution is also presented, through which the load applied to the discharge valve can be reduced. In accordance with this solution a limitation valve is positioned above the discharge valve, whereby the lower portion of the insertion chute forms an additional storage volume that may be employed awaiting the next emptying cycle. Said design has proven to be very efficient in its field of application, which is limited by the fact that the chute, having a diameter of for instance 500 mm, in itself is used as storage volume.

In very high buildings, that is buildings having many apartments using the same chute, and in large systems, that is systems comprising many buildings connected to one collection central or station, the chute above the limiting valve would risk being filled up to the first insertion chute before the next emptying cycle is initiated.

For the above reason different attempts have been made to provide expanded storage volumes at least in heavily loaded chutes. Said expanded storage volumes, that is containers having an essentially larger cross section than the chute, have been provided before the discharge valve to permit intermediate storage of the refuse while waiting for the next emptying cycle. Such a solution has limitations too, since the available space is almost always restricted and does not permit the installation of any larger volumes.

Another demand made on such solutions is that it must be possible to empty the expanded storage volumes rapidly. The reason for this is that the cycle times of larger systems will otherwise tend to be so long that it will no longer be possible to empty all of the units of the system within the prescribed time. Moreover, the risk of blockage or clogging must be minimized. Some known solutions employ a genuine gravity feed for discharging the refuse from the storage volume. This inevitably involves great risks of blockage or obstruction at the passage from the larger storage volume to the comparatively small diameter of the discharge pipe, which is not acceptable. In other cases an active discharge has been utilized, for instance by means of a feed screw, but this leads to relatively long emptying times.

It is clear from the above description that the expanded storage volume is a very essential part of the optimization of these systems that is required to cope with the task of handling refuse or garbage from ever higher buildings in ever bigger systems, that is larger residential areas or the like.

To sum up, it can therefore be established that solutions for removing the discussed problems have been presented and that said conventional solutions, although working well within the limits provided by the mentioned restrictions, have not been able to meet the ever higher demands made on the refuse transport system in its entirety.

A vacuum operated waste management system employing a feed screw positioned in the bottom region of a collecting tank is disclosed in EP 0 093 825. Emptying problems are only vaguely discussed therein and are intended to be handled by the provision of inflatable bellows at the bottom and/or long sides of the tank. Such bags should apparently be inflated in situation where waste gets stuck in the container due to bridging problems. No specific disclosure is made regarding where or how air should be introduced into the system to secure emptying by means of the applied vacuum.

### SUMMARY OF THE INVENTION

A basic object of the invention is to provide an improvement in a refuse transport or refuse handling system of the above described kind. Compared to the current systems this improvement makes it possible to use the system both for larger amounts of refuse per insertion chute and with a greater number of connected insertion chutes, and to simultaneously maintain a secure function. To be precise, the object is to achieve this by providing an expanded storage space that can be designed having the required volume and that can still be emptied rapidly and without problems. Expressed otherwise, the object is therefore to minimize the emptying time per storage volume to thereby shorten the overall cycle time of the system.

The invention is based on the understanding that the risk of arching or bridging and blockage can be eliminated in a storage volume that is expanded compared to the insertion chute diameter, that is emptied by applying vacuum thereto and that has an agitator provided therein and that the emptying time can simultaneously be optimized. According to the invention this is achieved by producing a pressure drop across the refuse in the storage volume by introducing air through an air intake opening at an upper part of the storage volume and by introducing air into the refuse at one or more positions just upstream or downstream of an outlet from the storage volume, as is specified in the characterizing portion of claim 1

In one particularly advantageous embodiment of the basic aspect of the invention the agitator or agitating means is caused to function in connection with a bottom that is inclined in relation to the horizontal plane, as is specified in the characterizing portion of claim 2. This does even further reduce the risk of blockage during the emptying of the storage volume.

Other, further developed embodiments of the basic aspect of the invention are specified in the dependent claims 3-6.

According to another aspect of the invention a refuse transport system of the above described kind is provided, employing the basic principles of the present invention. In said system the storage volumes employed therein each have an air intake opening at an upper part thereof to produce a pressure drop across the refuse in the storage volume and each have further air intake openings just upstream or downstream of an outlet, as is specified in the characterizing portion of claim 7. In accordance with said aspect a system is provided that is physically designed to permit optimization of the emptying cycles by providing at least strategically selected insertion chutes with expanded storage volumes that may be rapidly emptied.

Further developed embodiments of this second aspect of the invention are specified in the dependent claims 8-13.

According to yet another aspect of the invention an expanded storage volume is provided, having an air intake opening provided at an upper part thereof to produce a pressure drop across the refuse in the storage volume through the introduction of air therethrough and further air intake openings provided just upstream or downstream of an outlet from the storage volume, as is specified in the characterizing portion of claim 14.

Embodiments of this last mentioned aspect of the invention are specified in the dependent claims 15-17.

A further aspect of the invention relates to a use of an expanded storage volume designed in accordance with the basic principles of the invention, in a refuse suction system intended for domestic waste.

Further objects, features and advantages of the invention are explained more specifically in the following description of exemplifying embodiments thereof.

### BRIEF DESCRIPTION OF THE DRAWINGS

The invention will now be described more closely in connection with the accompanying drawings, in which:
- Fig. 1: in a schematical side view illustrates parts of a refuse suction system installed in a building and provided with an embodiment of an expanded storage volume according to the invention,
- Fig. 2: in a schematical, partial side view illustrates an embodiment of a bottom in an expanded storage volume according to the invention, and
- Fig. 3: in rough outline illustrates a positioning of the third air intake opening according to the invention.

### DETAILED DESCRIPTION

With reference to the drawing figures the basic principles of the invention shall now be described with the aid of a presently preferred embodiment thereof. At the same time the differences in comparison with conventionally employed vacuum operated systems shall be explained. In this connection it should also be explained that the expression "refuse" is used in this specification in a very wide sense and therefore comprises not only what is traditionally called "garbage" or "domestic waste" but fundamentally all fractions within the refuse handling field, such as newspapers, clothes and recyclable packages of different kinds.

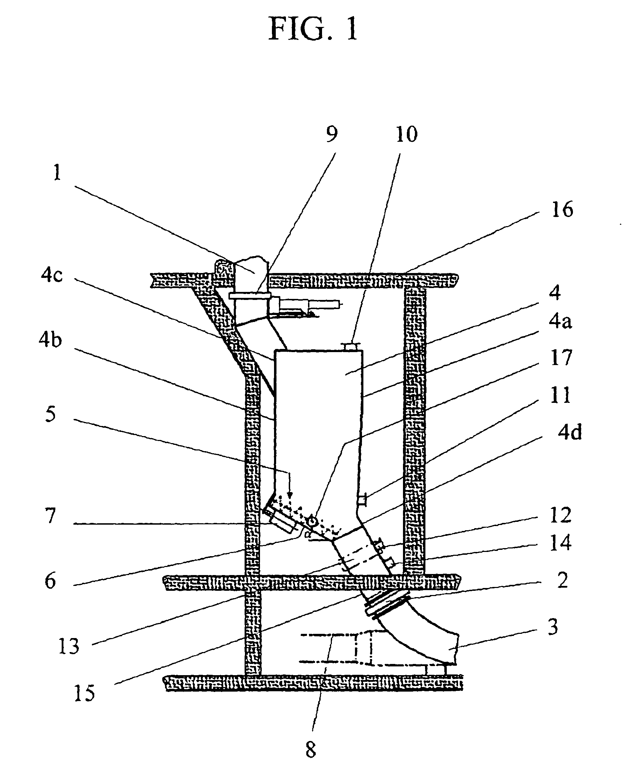

Fig. 1 schematically illustrates a lower floor, for instance a basement, of a building 16 equipped with an insertion chute 1 for refuse, which in a conventional manner extends up through all of the floors of the building. On each floor the chute is provided with an insertion opening, not shown, for refuse. Each insertion chute is connected to a transport pipe 3 through a discharge valve 2, which in this case is preferably a slide valve. The transport pipe 3 leads to a collection central, likewise not shown, to which the refuse is transported by means of a powerful vacuum.

An expanded storage volume 4 is formed in the insertion chute 1, between the lowermost floor of the building being provided with an insertion opening and the discharge valve 2. This expanded storage volume 4 is used for "intermediate storage" of refuse in buildings where so much refuse is produced between the emptying cycles of the system that it can not be held or contained in the actual chute 1. So far the described technique is quite conventional.

As has been stated in the introduction, the basic object of the invention is to provide the possibility of designing such an expanded storage volume 4 of a refuse transport system, having a volume as required by the system and yet permitting rapid emptying without problems. This will make it possible to minimize the emptying time per storage volume and thus to reduce the total cycle time of the system. In accordance with the embodiment of the invention that is illustrated in Fig. 1 this is achieved by providing an agitator 5 in connection with a bottom 6 of the expanded storage volume 4 and by providing said bottom 6 inclined upwardly at an angle α relative to a horizontal plane. Expressed otherwise, said bottom 6 is inclined downwardly, at the same angle, towards an outlet 4d from the storage volume 4.

In the embodiment illustrated in Fig. 1 the agitator 5 is a feed screw or worm being operated by a motor 7. The feed screw 5 is rotated to perform a feeding of the refuse, without compressing or packing it, at least in the area of the bottom 6 being positioned at a distance from the outlet 4d. The refuse is fed in a downward direction towards the outlet 4d. However, the main purpose of the agitator is to perform a redistribution and loosening of the refuse, not shown, partly received on the bottom 6 of the storage volume 4, and to do so particularly in the region of the outlet and in connection with the later more closely described emptying of the storage volume. This redistribution and loosening of the refuse contributes to preventing arching and other obstructions in the storage volume 4, and shall according to the invention preferably be performed without any actual compressing or packing of the refuse. If the refuse were compressed this could increase the risk of an added time consumed for the emptying or even of a blockage during emptying.

In order to provide this differentiated action of the agitator 5 this can be designed in different ways, for instance displaceable in the longitudinal direction thereof, having a pitch varying along its length, having a tapered shape, tapering towards its end positioned at the outlet or having two separate parts, of which the one that is positioned closest to the outlet rather has a shovel-like shape whereas the other part has the screw-shape. Depending upon for instance the geometry of the storage volume, which can be determined partly by the available space in the building, or upon the composition of the refuse, the agitator can be positioned so as to end at a short distance before the outlet 4d, immediately in the outlet opening or extending a short distance into the pipe that is connected to the outlet. All such modifications and variations lie within the scope of the invention.

Designing the agitator with different shapes providing the above described function suggested according to the invention, likewise falls within the scope of the invention. An example of such an alternative shape is a reciprocating rod, for instance the piston rod of a pneumatic cylinder, which is provided with engagement means that are active only in the forward feeding direction and become inactive in the direction of the return stroke.

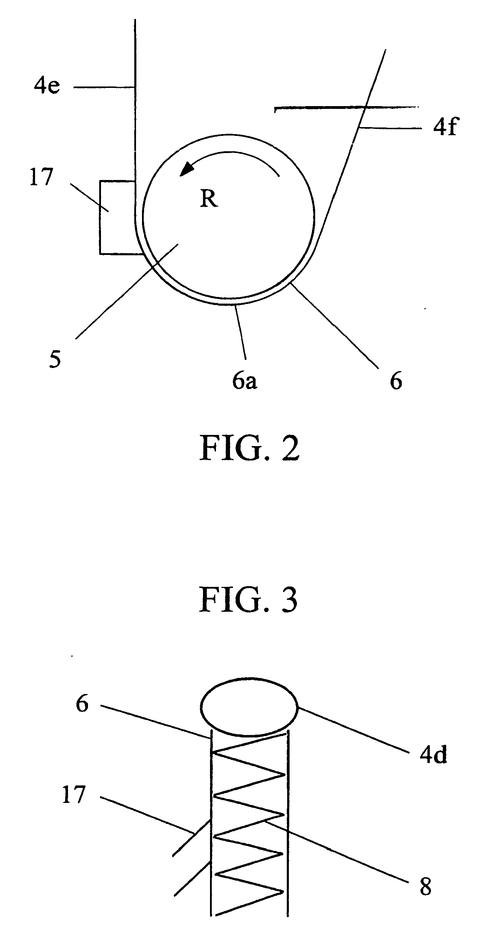

In order to eliminate the risk of the agitator 5 in the shape of the illustrated feed screw compressing or packing the refuse by pushing it too forcefully towards the outlet, the bottom 6 of the storage volume 4 is in this embodiment preferably formed having a cavity or recess 6a. The feed screw is positioned in the recess with the recess fitting tightly against the outer periphery of the feed screw 5 over a portion of its circumference. Fig. 2 illustrates that only the upper portion of the feed screw 5, which is directed towards the interior of the storage volume, is thereby left exposed to act against the refuse. Accordingly, the refuse can not be carried with the screw in any greater extent, but will only be acted upon in the above described manner.

Fig. 2 also illustrates that the wall 4e of the storage volume 4 that is positioned on the in-feed side of the screw 5, with reference to its sense of rotation R, is vertical. The purpose of this is to prevent refuse from building up and being packed there by the rotation of the screw. In order to secure the required volume of the storage container 4 the opposite wall 4f is on the contrary angled relative to the vertical. In a suitable embodiment this angle is approximately 30°.

In the presently preferred embodiment the storage volume is provided with two further substantially vertical side walls 4a, 4b. However, the first mentioned side wall is angled slightly inwardly towards the outlet 4d at its lower portion to form a slight funnel-shape together with the inclined bottom 6. This funnel-shape shall serve the purpose of guiding the refuse towards the outlet, but may not be so pointed or sharp that it causes or contributes to any arching or obstructing of the outlet 4d. The invention is not restricted to any specific cross section shape of the storage volume, but the illustrated side walls 4a, 4b can be part of a generally cylindrical, square or rectangular cross section shape.

Fig. 1 furthermore illustrates that the inlet 4c from the upper portion of the insertion chute 1 to the storage volume 4 and the outlet from the latter to the lowermost portion of the chute 1, are displaced in the horizontal plane in relation to each other. In practice they are provided adjacent two opposite walls 4b and 4a respectively of the storage volume. The purpose of this is to cause the refuse entering through the inlet 4c to accumulate in the most advantageous manner in the storage volume 4.

From Fig. 1 it is furthermore clear that the chute 1 is provided with an airtight shut-off valve 9, at a short distance above the inlet 4c. Said valve can be of an optional known design. The purpose of this valve is to prevent the vacuum applied to the storage volume 4 in the manner described more closely below, from propagating upwardly in the chute and there causing a risk of injuries, should an insertion opening be opened at the same time as the storage volume is emptied.

In order to provide a later explained transport function by means of the vacuum applied to the storage volume 4, said volume is furthermore provided with one or more air intake openings 10, 11, 12 and 17 (see especially figs. 2 and 3) in combination, and their function will likewise be explained more closely below. These openings have only been indicated in Fig. 1, but in reality they are connected to a pipe system that is not shown in the figure. The air can be taken from different places, such as from the culvert of the transport pipe 3.

In the preferred embodiment the function according to the invention is the following. Between the emptying cycles of the insertion chute of the system, which is illustrated in Fig. 1, the refuse that has been inserted into the chute through the insertion openings (not shown) will be collected in the expanded storage volume 4. Said refuse will rest on the bottom 6 and on the side walls 4a, 4b of the storage volume. When it is time to empty the chute 1 the system applies a strong vacuum through the transport pipe 3. This produces a powerful suction through the opening of the discharge valve 2, which is preferably of the slide type and which connects the expanded storage volume to the transport pipe 3 for the discharge of the refuse therethrough.

According the invention it is important for the emptying of the refuse material in the storage volume 4 to provide a pressure drop across said material. In order to provide said pressure drop the storage volume is always provided with a first air intake opening 10 in connection with the upper part of the storage volume 4. In certain cases this opening may have to be supplemented with a second air intake opening provided in the container wall 4a just above the outlet 4d. The purpose of this second air inlet opening 11 is to introduce air close to the outlet in exposed applications where the risk of blockage in the outlet is greater for some reasons. Said air is introduced partly to form a kind of air cushion reducing the friction of the refuse against the container wall and partly to generally introduce air into the refuse to "loosen" the refuse in this critical position.

Moreover, it has proven to be appropriate in some applications to provide a third air intake opening 17 directly in the area of the screw 5. The purpose of this is to enhance the feeding of the refuse therethrough, in the direction towards the outlet opening 4d. It is clear from Fig. 1 that in a suitable design the third air inlet opening 17 is provided in a position corresponding to approximately 2/3 of the distance from the wall 4b to the outlet opening 4d. However, this position may be varied in different applications, depending for instance upon the length of the agitator 5. Fig. 2 schematically illustrates that this third air intake opening 17 opens in the wall 4e in a position at a level with the centre line of the agitator 5 and at the infeed side of the screw. Fig. 3 finally illustrates that this third air inlet opening 17 is directed towards the outlet opening 4d at an angle of 45° relative to the wall 4e. Performed tests show that such a positioning has a positive effect upon the feeding action of the screw, although the invention is not restricted to these specific statements regarding the positioning and alignment respectively.

Moreover, it may be appropriate in certain applications to provide a forth air inlet opening 12 in combination with the first 10 and possibly also with the second 11 and/or third 17 air inlet openings. Such a forth air inlet opening 12 is preferably positioned just downstream of the outlet 4d to secure the transport of the refuse down to the transport pipe 3. In one embodiment this forth air inlet opening 12 can be coordinated with a ring ejector 13, illustrated in Fig. 1, which further enhances the transport action against the refuse in a direction towards the transport pipe 3.

In order to secure the transport of the refuse through the transport pipe 3 measures do furthermore have to be taken, in a manner known per se, to eliminate a too powerful vacuum. In the illustrated embodiment this is achieved by positioning a safety valve 14 in the outlet pipe 15 connecting the outlet 4d of the storage volume 4 to the transport pipe 3 and opening an air supply when the vacuum becomes too powerful. The same function can also be achieved by means of a not illustrated, controllable air inlet valve, which communicates with the transport pipe 3 through piping 8 indicated in Fig. 1.

In connection with the opening of the discharge valve 2, or preferably just before said opening, the feed screw 5 is activated by the motor 7 in order to eliminate any risk of arching and clogging in or by the refuse stored in the storage volume 4, and in order to thereby increase the speed of the emptying.

As mentioned above, this is achieved by the fact that the feed screw 5 is primarily intended for "stirring" the refuse and not for feeding the refuse forcefully towards the outlet. The actual discharge/emptying is performed by the combination of the applied strong vacuum and gravity. In this connection, it should also be mentioned that the speed of the screw is preferably controlled or regulated for adaption to the prevailing circumstances.

Characteristic of the emptying of the storage volume in accordance with the principles of the present invention is therefore, on the one hand, the combination of the gravity and suction feed. On the other hand, this is made possible by the use of the agitator that eliminates the risk of arching and blockage. With a traditional approach the risk of arching and blockage would be associated with such a combined gravity and suction feed from an expanded storage volume and into the transport pipe system. By means of the suggested measures it is possible to achieve the desired rapid, but yet secure emptying of insertion chutes having an expanded storage volume. This means that larger and more heavily loaded or charged areas having higher and higher buildings can be connected to a refuse transport system. In particular it will be possible, in accordance with the invention, to achieve an emptying time of normally 15-30 seconds, in an extreme case down to approximately 10 seconds, for an expanded storage volume in the order of 1,5 to 2 m³. In most cases this size of expanded storage volume is sufficient in insertion chutes of the standard dimension ∅ 500 mm, although the invention may with the same advantage be used for a storage volume of a size in the area of 1,5 up to approximately 4 m³. Such an emptying time is in most cases optimal since an even quicker emptying could cause too heavy a pressure drop in the system.

To sum up, the use of the basic principles of the invention will provide the following advantages in relation to typical conventional solutions:
- Shorter emptying time
- Minimized risk of functional disorder by arching and clogging in the passage between the storage volume and the chute, and thereby
- Reduced need for inspection and maintenance during operation
- Permits the connection of larger groups of ever higher buildings to one and the same system
- Provides an increased possibility of optimizing the emptying times and cycles of the system.

In accordance with the principles of the invention a vacuum operated refuse transport system can be provided with the inventive expanded storage volumes in all of the insertion chutes or in only the insertion chutes having the heaviest load. Thereby, the agitators and/or the vacuum are activated in the separate insertion chutes during certain or all of the emptying cycles therefore, in the system. Thereby, the agitators and/or the vacuum may be activated in the storage volumes of the separate insertion chutes in accordance with a pre-set program or in response to a detected need in the form of a requirement for a rapid emptying, dependent on the total emptying cycle of the system and/or in the form of a large volume of refuse stored in the storage space.

The invention is presently regarded as having its major field of application in connection with a refuse suction system adapted to domestic waste. This also includes such so called mobile refuse suction systems that comprise an expanded storage volume in connection with the lower end of each insertion chute, that is emptied by a suction vehicle being connected directly thereto. The expanded storage volume according to the invention can advantageously be applied to such a system, and such a use of the expanded storage volume of the invention shall therefore be covered by the invention.

Within the scope of the invention, its basic principles may also be applied to refuse transport systems employed in other circumstances than the one specifically mentioned, such as for hospital waste, office waste etc. Likewise, the invention is not restricted to the use of a feed screw as the agitator, although this is presently regarded to be the most appropriate means. Thus, as was mentioned above, other mechanical means may also be employed, which without any appreciable compression provides the desired "stirring" of the material in question.

It will be understood by those skilled in the art that various modifications and changes may be made to the present invention without departure from the scope thereof, which is defined by the appended claims.

## Claims

1. A method of emptying an expanded storage volume (4) provided above the discharge valve (2) in an insertion chute (1) of a vacuum operated refuse transport system, wherein a vacuum is applied to the expanded storage volume (4) with the discharge valve (2) being opened, and an agitator (5) provided in the storage volume is activated in connection therewith, **characterized in that** a pressure drop is produced across the refuse in the storage volume by the introduction of air through an air intake opening (10) provided in connection with an upper part of the storage volume and that air is introduced into refuse present in the storage volume (4) through further air intake openings (11, 12, 17) at one or more positions just upstream or downstream of an outlet (4d) from the storage volume, whereby the refuse is discharged from the storage volume through a combination of gravity and the applied vacuum and whereby the risk of blockage, for instance caused by arching of the refuse in the storage volume, of the discharge is eliminated through the action of the agitator.

2. A method according to claim 1, **characterized in that** the agitator (5) is caused to operate in connection with a bottom (6) of the storage volume (4), which is provided inclined downwardly (the angle α), in relation to the horizontal plane, towards the outlet (4d) from the storage volume.

3. A method according to claims 1 or 2, **characterized in that** the agitator (5) is operated for the purpose of feeding the refuse towards the outlet (4d) from the storage volume (4) and to redistribute and loosen the refuse in said volume (4), and to do so without any actual compressing of the refuse.

4. A method according to any of claims 1-3, **characterized in that** a feed screw is employed as agitator (5) and **in that** the feed screw (5) is rotated with a regulated speed.

5. A method according to any of claims 2-4, **characterized in that** an inlet (4c) to the expanded storage volume (4) is provided displaced in the horizontal plane from the outlet (4d) and **in that** its communication with the insertion chute (1) is closed by a shut-off valve (9) during emptying.

6. A method according to claims 4 or 5, **characterized in that** the feed screw (5) is caused to receive the refuse that is stored in the storage volume (4) with only a portion of its circumference that is directed inwardly towards the storage volume.

7. A vacuum operated refuse transport system having insertion chutes (1) connected to a transport pipe (3) through discharge valves (2), whereby at least some of the insertion chutes of the system are equipped with an expanded storage volume (4) at a position above the discharge valve, an agitator (5) is provided in each storage volume to redistribute and loosen the refuse without compressing it and through the transport pipe (3) each expanded storage volume (4) is connectable to a vacuum source, preferably of the system operating vacuum, **characterized in that** each storage volume (4) has an air intake opening (10) provided in connection with an upper part thereof and adapted to produce a pressure drop across the refuse provided in the storage volume through the introduction of air therethrough and that each storage volume (4) has further air intake openings (11, 12, 17) at one or more positions just upstream or downstream of an outlet (4d).

8. A system according to claim 7, **characterized in that** the expanded storage volume (4) is provided with essentially vertical side walls (4a, 4b, 4e, 4f) and **in that** the agitator (5) is provided in connection with a bottom (6) of the storage volume (4).

9. A system according to any of claims 7 or 8, **characterized in that** a mechanical agitator (5) is provided in the storage volume (4), preferably a feed screw of a regulated speed.

10. A system according to any of claims 7-9, **characterized in that** in relation to the horizontal plane the bottom (6) of the expanded storage volume (4) is provided inclined downwardly (the angle α) towards the outlet (4d) from the storage volume.

11. A system according to any of claims 7-10, **characterized in that** the expanded storage volume (4) is provided with an inlet (4c) that is displaced in a horizontal direction in relation to the outlet (4d) from the storage volume and **in that** a shut-off valve (9) is provided in the insertion chute (1), in connection with the inlet, for closing the chute in connection with the emptying.

12. A system according to claim 11, **characterized in that** the inlet (4c) to and outlet (4d) from the expanded storage volume (4) are connected to a standardized insertion chute (1), for instance having a diameter of 500 mm and **in that** the storage volume has a capacity in the area of 1,5 - 4 m³, especially in the area of 1,5 - 2 m³.

13. A system according to any of claims 7-12, **characterized in that** the bottom (6) of the expanded storage volume (4) partially (the recess 6a) encloses the agitator (5) such that only an upper portion thereof is exposed to the refuse in the storage volume (4).

14. An expanded storage volume (4) for an insertion chute (1), which through a discharge valve (2) is connectable to a vacuum for emptying the volume, whereby the storage volume is provided in the insertion chute at a position above the discharge valve and which has an agitator (5) provided therein, in connection with a bottom (6) thereof, **characterized in that** the storage volume has an air intake opening (10) provided in connection with an upper part thereof and adapted to produce a pressure drop across the refuse provided in the storage volume through the introduction of air therethrough and that the storage volume (4) has further air intake openings (11, 12, 17) at one or more positions just upstream or downstream of an outlet (4d) from the storage volume.

15. An expanded storage volume (4) according to claim 14, **characterized in that** the agitator (5) is mechanical, preferably a feed screw having a regulated speed.

16. An expanded storage volume (4) according to claims 14 or 15, **characterized in that** in relation to the horizontal plane its bottom (6) is provided inclined downwardly (the angle α) towards the outlet (4d) from the storage volume and **in that** it is provided with an inlet (4c) that is displaced in a horizontal direction in relation to the outlet (4d).

17. An expanded storage volume (4) according to any of claims 14-16, **characterized in that** its bottom (6) partially (the recess 6a) encloses the agitator (5) such that only an upper portion thereof is exposed to the refuse received in the storage volume (4).

18. The use of an expanded storage volume (4) according to any of claims 14-17 in a refuse suction system adapted to domestic waste.

## Patentansprüche

1. Verfahren zum Leeren eines erweiterten Speicherraums (4), der oberhalb des Leerventils (2) in einem Zuführkanal (1) eines vakuumbetriebenen Abfalltransportsystems bereitgestellt ist, wobei ein Vakuum auf den erweiterten Speicherraum (4) angewendet ist, wobei das Leerventil (2) geöffnet wird, und ein Rührapparat (5), das im Speicherraum bereitgestellt ist, in Verbindung damit aktiviert ist, **dadurch gekennzeichnet, dass** ein Druckabfall über dem Abfall im Speicherraum durch Einführen von Luft durch eine Lufteinlassöffnung (10) erzeugt ist, die in Verbindung mit einem oberen Teil des Speicherraums bereitgestellt ist, und dass Luft in den Abfall, der im Speicherraum (4) vorhanden ist, durch weitere Lufteinlassöffnungen (11, 12, 17) an einer oder mehreren Stellen direkt stromaufwärts oder stromabwärts von einem Auslass(4d) aus dem Speicherraum eingeführt ist, wodurch der Abfall aus dem Speicherraum durch eine Kombination von Schwerkraft und angewendetem Vakuum abgelassen ist und wodurch die Gefahr des Blockierens, die zum Beispiel durch Brückenbildung des Abfalls im Speicherraum verursacht ist, des Abfalls durch die Wirkung des Rührapparats beseitigt ist.

2. Verfahren nach Anspruch 1, **dadurch gekennzeichnet, dass** der Rührapparat (5) in Verbindung mit einem Boden (6) von Speicherraum (4) betrieben wird, der gegenüber der horizontalen Ebene, in Richtung auf den Auslass (4d) aus dem Speicherraum, (unter dem Winkel α) nach unten geneigt bereitgestellt ist.

3. Verfahren nach den Ansprüchen 1 oder 2, **dadurch gekennzeichnet, dass** der Rührapparat (5) zum Zweck der Zufuhr zum Auslass (4d) aus dem Speicherraum (4) und zum Umverteilen und Lockern des Abfalls im Raum (4) und zur Ausführung dieser Aktivität, ohne den Abfall zu komprimieren, betrieben wird.

4. Verfahren nach einem der Ansprüche 1-3, **dadurch gekennzeichnet, dass** eine Förderschnecke als Rührapparat (5) eingesetzt wird und dass die Förderschnecke (5) mit einer regulierten Geschwindigkeit rotiert.

5. Verfahren nach einem der Ansprüche 2-4, **dadurch gekennzeichnet, dass** ein Einlass (4c) in den erweiterten Speicherraum (4) bereitgestellt ist, der in der horizontalen Ebene gegenüber dem Auslass (4d) versetzt ist, und dass seine Verbindung mit dem Zuführkanal (1) durch ein Absperrventil (9) während des Leerens geschlossen ist.

6. Verfahren nach den Ansprüchen 4 oder 5, **dadurch gekennzeichnet, dass** die Förderschnecke (5) den Abfall, der im Speicherraum (4) gespeichert ist, mit nur einem Abschnitt ihres Umfangs, der zum Speicherraum hin gerichtet ist, aufnimmt.

7. Vakuumbetriebenes Abfalltransportsystem, das Zuführkanäle (1) aufweist, die mit einem Transportrohr(3) durch die Leerventile (2) verbunden sind, wodurch mindestens einige Zuführkanäle des Systems mit einem erweiterten Speicherraum (4) an einer Stelle oberhalb des Leerventils ausgestattet sind, ein Rührapparat (5) in jedem Speicherraum zum Verteilen und Lockern des Abfalls bereitgestellt ist, ohne ihn zu verdichten, und durch das Transportrohr (3) jeder erweiterte Speicherraum (4) mit einer Vakuumquelle verbunden sein kann, vorzugsweise des Systembetriebsvakuums, **dadurch gekennzeichnet, dass** jeder Speicherraum (4) eine Lufteinlassöffnung (10), die bereitgestellt ist, in Verbindung mit einem oberen Teil desselben hat und zum Erzeugen eines Druckabfalls über dem Abfall, der im Speicherraum bereitgestellt ist, durch Einführen von Luft durch denselben ausgelegt ist und dass jeder Speicherraum (4) weitere Lufteinlassöffnungen (11, 12, 17) an einer oder mehreren Stellen direkt stromaufwärts oder stromabwärts von einem Auslass (4d) hat.

8. System nach Anspruch 7, **dadurch gekennzeichnet, dass** der erweiterte Speicherraum (4) mit im Wesentlichen senkrechten Seitenwänden (4a, 4b, 4e, 4f) versehen ist und dass der Rührapparat (5) in Verbindung mit einem Boden (6) des Speicherraums (4) steht.

9. System nach einem der Ansprüche 7 oder 8, **dadurch gekennzeichnet, dass** ein mechanischer Rührapparat (5) im Speicherraum (4), vorzugsweise eine Förderschnecke mit einer regulierten Drehzahl, bereitgestellt ist.

10. System nach einem der Ansprüche 7-9, **dadurch gekennzeichnet, dass** der Boden (6) des erweiterten Speicherraums (4) in Richtung auf den Auslass (4d) aus dem Speicherraum relativ zur horizontalen Ebene nach unten geneigt (Winkel α) ist.

11. System nach einem der Ansprüche 7-10, **dadurch gekennzeichnet, dass** der erweiterte Speicherraum (4) mit einem Einlass (4c) versehen ist, der in horizontaler Richtung gegenüber dem Auslass (4d) aus dem Speicherraum versetzt ist und dass ein Absperrventil (9) im Zuführkanal (1) in Verbindung mit dem Einlass zum Schließen des Kanals in Zusammenhang mit dem Leeren versehen ist.

12. System nach Anspruch 11, **dadurch gekennzeichnet, dass** der Einlass (4c) in den und der Auslass (4d) aus dem erweiterten Speicherraum (4) mit einem genormten Zuführkanal (1) verbunden sind, der zum Beispiel einen Durchmesser von 500 mm aufweist, und dass der Speicherraum ein Fassungsvermögen von 1,5-4 m³, besonders im Bereich von 1,5-2 m³, aufweist.

13. System nach einem der Ansprüche 7-12, **dadurch gekennzeichnet, dass** der Boden (6) des erweiterten Speicherraums (4) teilweise (Vertiefung 6a) den Rührapparat (5) derart umschließt, dass nur der obere Abschnitt desselben in Kontakt mit dem Abfall im Speicherraum (4) kommt.

14. Erweiterter Speicherraum (4) für einen Zuführkanal (1), der durch ein Leerventil (2) mit einem Vakuum zum Leeren des Raums verbunden werden kann, wodurch der Speicherraum im Zuführkanal an einer Position oberhalb des Leerventils bereitgestellt ist, und der ein Rührapparat (5), das darin bereitgestellt ist, in Verbindung mit einem Boden (6) desselben hat, **dadurch gekennzeichnet, dass** der Speicherraum eine Lufteinlassöffnung (10), die bereitgestellt ist, in Verbindung mit einem oberen Teil desselben hat und dafür ausgelegt ist, einen Druckabfall über dem Abfall, der im Speicherraum bereitgestellt ist, durch Einführen von Luft durch dieselbe zu erzeugen und dass der Speicherraum (4) weitere Lufteinlassöffnungen (11, 12, 17) an einer oder mehreren Stellen direkt stromaufwärts oder stromabwärts von einem Auslass (4d) des Speicherraums hat.

15. Erweiterter Speicherraum (4) nach Anspruch 14, **dadurch gekennzeichnet, dass** der Rührapparat (5) mechanisch arbeitet, vorzugsweise eine Förderschnecke ist, die eine regulierte Drehzahl aufweist.

16. Erweiterter Speicherraum (4) nach Anspruch 14 oder 15, **dadurch gekennzeichnet, dass** sein Boden (6) bezüglich der horizontalen Ebene nach unten (Winkel α) zu einem Auslass (4d) aus dem Speicherraum hin geneigt ist und dass er mit einem Einlass (4c) versehen ist, der in horizontaler Richtung gegenüber dem Auslass (4d) verschoben ist.

17. Erweiterter Speicherraum (4) nach einem der Ansprüche 14-16, **dadurch gekennzeichnet, dass** sein Boden (6) teilweise (Vertiefung 6a) den Rührapparat (5) derart umschließt, dass nur ein oberer Abschnitt desselben mit dem Abfall, der im Speicherraum (4) enthalten ist, in Kontakt kommt.

18. Verwendung eines erweiterten Speicherraums (4) gemäß einem der Ansprüche 14-17 in einem Abfallabsaugsystem, das für Hausmüll ausgelegt ist.

## Revendications

1. Procédé pour vider un volume de stockage développé (4) pourvu au dessus d'une soupape d'évacuation (2) dans une colonne d'insertion (1) d'un système de transport d'ordures commandé par dépression, dans lequel une dépression est appliquée au volume de stockage développé (4), la soupape d'évacuation (2) étant ouverte et un agitateur (5) pourvu dans le volume de stockage est activé en connexion avec celui-ci, **caractérisé en ce qu'**une chute de pression est produite dans les ordures dans le volume de stockage par l'introduction d'air via une ouverture d'admission d'air (10) pourvue en connexion avec une partie supérieure du volume de stockage et cet air est introduit dans les ordures présentes dans le volume de stockage (4) via des ouvertures d'admission d'air supplémentaires (11, 12, 17) au niveau d'une ou de plusieurs positions juste en amont ou en aval d'une sortie (4d) depuis le volume de stockage, ce par quoi les ordures sont évacuées du volume de stockage grâce à une combinaison de la gravité, et de la dépression appliquée et ce par quoi le risque de blocage, par exemple provoqué par le bombement des ordures dans le volume de stockage, de l'évacuation est éliminé grâce à l'action de l'agitateur.

2. Procédé selon la revendication 1, **caractérisé en ce que** l'agitateur (5) est entraîné en fonctionnement en connexion avec une partie inférieure (6) du volume de stockage (4) qui est pourvue inclinée vers le bas (l'angle α), par rapport à un plan horizontal, vers la sortie (4d) depuis le volume de stockage.

3. Procédé selon la revendication 1 ou la revendication 2, **caractérisé en ce que** l'agitateur (5) est mis en fonctionnement dans le but d'alimenter les ordures vers la sortie (4d) à partie du volume de stockage (4) et de redistribuer et décompacter les ordures dans ledit volume (4), et de ce faire sans compression réelle quelconque des ordures.

4. Procédé selon l'une quelconque des revendications 1 à 3, **caractérisé en ce qu'**une vis de commande de l'avance est utilisée comme agitateur (5) et **en ce que** la vis de commande de l'avance (5) est entrée en rotation à une vitesse régulée.

5. Procédé selon l'une quelconque des revendications 2 à 4, **caractérisé en ce qu'**une entrée (4c) vers le volume de stockage développé (4) est pourvue déplacée dans le plan horizontal depuis la sortie (4d) et **en ce que** sa communication avec la colonne d'insertion (1) est fermée par une soupape d'isolement (9) lors du vidage.

6. Procédé selon la revendication 4 ou la revendication 5, **caractérisé en ce que** la vis de commande de l'avance (5) est entraînée pour recevoir les ordures qui sont stockées dans le volume de stockage (4) avec uniquement une portion de sa circonférence qui est dirigée à l'intérieur vers le volume de stockage.

7. Système de transport des ordures commandé par dépression présentant des colonnes d'insertion (1) raccordées à une conduite de transport (3) grâce à des soupapes d'évacuation (2), au moins quelques-unes des colonnes d'insertion du système étant ainsi équipées avec un volume de stockage développé (4) au niveau d'une position au dessus de la soupape d'évacuation, un agitateur (5) est pourvu dans chaque volume de stockage pour redistribuer et décompacter les ordures sans les comprimer et au travers de la conduite de transport (3) chaque volume de stockage développé (4) peut être raccordé à une source de dépression, de préférence du système faisant fonctionner la dépression, **caractérisé en ce que** chaque volume de stockage (4) présente une ouverture d'admission d'air (10) pourvue en connexion avec une partie supérieure de celui-ci et adaptée pour produire une chute de pression dans les ordures pourvues dans le volume de stockage via l'introduction d'air dans celles-ci et **en ce que** chaque volume de stockage (4) présente des ouvertures d'admission d'air supplémentaires (11, 12, 17) au niveau d'une ou de plusieurs positions juste en amont ou en aval d'une sortie (4d).

8. Système selon la revendication 7, **caractérisé en ce que** le volume de stockage développé (4) est pourvu avec des parois latérales essentiellement verticales (4a, 4b, 4e, 4f) et **en ce que** l'agitateur (5) est pourvu en rapport avec une partie inférieure (6) du volume de stockage (4).

9. Système selon l'une quelconque des revendications 7 ou 8, **caractérisé en ce qu'**un agitateur mécanique (5) est pourvu dans le volume de stockage (4), de préférence une vis de commande de l'avance d'une vitesse régulée.

10. Système selon l'une quelconque des revendications 7 à 9, **caractérisé en ce que** par rapport à un plan horizontal, la partie inférieure (6) du volume de stockage développé (4) est pourvue inclinée vers le bas (l'angle α) vers une sortie (4d) depuis le volume de stockage.

11. Système selon l'une quelconque des revendications 7 à 10, **caractérisé en ce que** le volume de stockage développé (4) est pourvu avec une entrée (4c) qui est déplacée dans une direction horizontale par rapport à la sortie (4d) à partir du volume de stockage, et **en ce qu'**une soupape d'isolement (9) est pourvue dans la colonne d'insertion (1), en connexion avec l'entrée, pour fermer la colonne en connexion avec le vidage.

12. Système selon la revendication 11, **caractérisé en ce que** l'entrée (4c) vers le volume de stockage développé (4) et la sortie (4d) de celui-ci sont raccordées à une colonne d'insertion standardisée (1), par exemple présentant un diamètre de 500 mm, et **en ce que** le volume de stockage présente une capacité d'environ 1,5 à 4 m³, particulièrement d'environ 1,5 à 2 m³.

13. Système selon l'une quelconque des revendications 7 à 12, **caractérisé en ce que** la partie inférieure (6) du volume de stockage développé (4) enferme partiellement (l'évidement 6a) l'agitateur (5) de sorte que seulement une portion supérieure de celui-ci est exposée aux ordures dans le volume de stockage (4).

14. Volume de stockage développé (4) pour une colonne d'insertion (1), qui peut être raccordé au travers d'une soupape d'évacuation (2) à une dépression pour vider le volume, ce par quoi le volume de stockage est pourvu dans la colonne d'insertion au niveau d'une position au dessus de la soupape d'évacuation, et qui présente un agitateur (5) pourvu à l'intérieur de celui-ci, en connexion avec un fond (6) de celui-ci, **caractérisé en ce que** le volume de stockage présente une ouverture d'admission d'air (10) pourvue en connexion avec une partie supérieure de celui-ci et adaptée pour produire une chute de pression dans les ordures pourvues dans le volume de stockage via l'introduction d'air dans celles-ci et **en ce que** le volume de stockage (4) présente des ouvertures d'admission d'air supplémentaires (11, 12, 17) au niveau d'une ou de plusieurs positions juste en amont ou en aval d'une sortie (4d) depuis le volume de stockage.

15. Volume de stockage développé (4) selon la revendication 14, **caractérisé en ce que** l'agitateur (5) est mécanique, de préférence une vis de commande de l'avance présentant une vitesse régulée.

16. Volume de stockage développé (4) selon les revendications 14 ou 15, **caractérisé en ce que** par rapport à un plan horizontal, sa partie inférieure (6) est pourvue inclinée vers le bas (l'angle α) vers la sortie (4d) depuis le volume de stockage, et **en ce qu'**il est pourvu d'une entrée (4c) qui est déplacée dans une direction horizontale par rapport à la sortie (4d) .

17. Volume de stockage développé (4) selon l'une quelconque des revendications 14 à 16, **caractérisé en ce que** sa partie inférieure (6) renferme partiellement (l'évidement 6a) l'agitateur (5) de sorte que seulement une portion supérieure de celui-ci est exposée aux ordures reçues dans le volume de stockage (4) .

18. Utilisation d'un volume de stockage développé (4) selon l'une quelconque des revendications 14 à 17 dans un système d'aspiration des ordures adapté aux déchets ménagers.
